# EUROPÄISCHE PATENTSCHRIFT

(11) **EP 3 375 727 B1**
(45) Veröffentlichungstag und Bekanntmachung des Hinweises auf die Patenterteilung: **22.05.2019**
(21) Anmeldenummer: 17160628.8
(22) Anmeldetag: 13.03.2017
(51) Int. Cl.: B65D 57/00, B65D 85/66, B65G 57/00

(54) **TRANSPORTEINHEIT UND VERFAHREN ZUR ANORDNUNG VON ZWISCHENHÖLZERN AUF SPALTBÄNDERN**
TRANSPORT UNIT AND METHOD FOR ARRANGING WOODEN SEPARATORS ON COILS
UNITÉ DE TRANSPORT ET PROCÉDÉ DE DISPOSITION DE TRAVERSES EN BOIS SUR DES BANDES REFENDUES

(43) Veröffentlichungstag der Anmeldung: 19.09.2018
(73) Patentinhaber: Becker Stahl-Service GmbH, 59199 Bönen (DE)
(72) Erfinder: Pöttcker, Michael, 33449 Langenberg (DE)
(74) Vertreter: Patentanwälte Dörner & Kötter PartG mbB

(56) Entgegenhaltungen:
- EP-A2- 2 194 211
- DE-A1- 2 524 989
- US-A- 5 127 619

## Beschreibung

Die Erfindung betrifft eine Transporteinheit, bestehend aus einem Bund aus mindestens zwei Spaltbändern aus Aluminium. Die Erfindung betrifft außerdem ein Verfahren zur Anordnung von Zwischenhölzern auf Spaltplatten aus Aluminium.

Bei Aluminiumband handelt es sich um zu einer Rolle aufgewickeltes Flachaluminium. Es gilt als Breitband, soweit die Rolle eine Breite von mindestens 600 mm aufweist; Mittel- und Schmalband weist eine Breite von 20 bis 600 mm auf. Das Mittel- und Schmalband wird in der gewünschten Breite aus Breitband in Spaltanlagen hergestellt.

Der Transport von Breitbändern erfolgt üblicherweise in einer Position, in der die Bandachse horizontal ausgerichtet ist, sogenannte "stehende Anordnung". Bei Mittel- und Schmalbändern kommt sowohl ein Transport als auch eine Lagerung mit horizontal ausgerichteter Achse oder mit vertikal ausgerichteter Achse in Betracht, sogenannte "liegende Anordnung". Nachfolgend wird lediglich der liegende Transport und die liegende Lagerung der Bänder betrachtet.

Im Falle der liegenden Anordnung des Bandes werden aus Gründen der Raumersparnis üblicherweise mehrere Bänder übereinander gestapelt, wodurch mehrlagige Anordnungen hervorgerufen sind. Die Anzahl der Lagen bestimmt sich zum einen durch die Breite des jeweiligen Bandes, zum anderen in Abhängigkeit des Gewichts der Rollen. Zum Stapeln der Bänder werden diese üblicherweise auf eine Palette aufgelegt, auf der dann mehrere Bänder koaxial übereinander gestapelt werden. Um ein unmittelbares Aufeinanderliegen der einzelnen Bänder zu vermeiden, werden Zwischenhölzer auf die Bänder gelegt, die für das darüber angeordnete Band eine Auflage darstellen.

Die bekannten Zwischenhölzer sind aus Naturholz hergestellt. Diese Art von Zwischenhölzern in Form von Holzlatten ist deshalb weit verbreitet, weil Zwischenhölzer aus Naturholz sehr einfach und preiswert herstellbar sind. Die Holzlatten bilden dann die Zwischenlage der aufeinander liegenden Bänder bis eine Anzahl an Bändern ein Packstück ergibt, welches den Kundenwünschen hinsichtlich der Höhe des Packstücks und der Anzahl an Spaltbändern entspricht. Überwiegend finden Holzlatten aus Fichte beziehungsweise anderen Tannenarten Anwendung. Die Verwendung dieser Holzlatten weist jedoch eine Reihe von Nachteilen auf. So wohnt den Holzlatten aus Naturholz eine erhöhte Restfeuchte inne, die zu Korrosion an den gestapelten Bändern führen kann, insbesondere durch das Stapeln der Spaltbänder. Aufgrund des hohen Gewichts der Spaltbänder wirken auf die untersten Holzlatten Drücke von über 20 kg/cm². Die Feuchte wird daher förmlich aus den Holzlatten herausgepresst.

Darüber hinaus haben die Naturhölzer einen Abrieb in Form von Spänen oder Splittern, der sich bei den dichtgewickelten Bändern insbesondere aus weichen Materialien, wie beispielsweise Aluminium, in diese eindrückt und somit zu Qualitätsminderungen beim aufgewickeltem Band führt, welche zumeist erst bei der Weiterverarbeitung der Bänder erkannt werden. Auch führen die Späne oder Splitter zu einer Verunreinigung nachgeordneter Bearbeitungszentren wie beispielsweise Stanzwerkzeugen, was zu Abdrücken am Fertigprodukt führen kann.

Des Weiteren sondern insbesondere die aus Tannenhölzern hergestellten Holzlatten Harz ab, was ebenfalls die Qualität des Bandes mindert. Da es sich bei den bekannten Zwischenhölzern um solche aus Naturholz handelt, sind diese in ihrer Form und Gestalt nicht immer gleich, so dass ein exaktes Ausrichten der übereinandergestapelten Bänder kaum möglich ist. Hinzu kommt, dass die Hölzer aufgrund des Zurechtsägens über eine so genannte sägeraue Oberfläche verfügen, die die Absonderung von Spänen und Splittern unterstützt.

Aus der US 5 127 619 A sind Zwischenelemente bekannt, die aus thermoplastischem Kunststoff hergestellt sind. Diese vermeiden zwar die Absonderung von Harz, Spänen und Splittern; sie weisen jedoch andere Nachteile auf, insbesondere in Bezug auf ihre Eignung zum Recycling.

Außerdem besteht das Erfordernis, dass Zwischenhölzer in unterschiedlichen Längen aufgrund der unterschiedlichen Durchmesser der Spaltbänder bevorratet werden müssen. Ist dies nicht der Fall, müssen die Hölzer entweder vor dem Auflegen auf die Spaltbänder zurechtgeschnitten werden oder die Enden der Hölzer stehen über den Durchmesser der Bänder über, was die Handhabung beim Verladen erschwert und den Platzbedarf unnötig erhöht.

Aufgrund der Probleme hinsichtlich der Abmessungen der Zwischenhölzer im Verhältnis zu den Durchmessern der Bänder führt dies zu Schwierigkeiten in der automatisierten Handhabung, weshalb die bekannten Zwischenhölzer üblicherweise von Hand aufgelegt werden. Dabei entstehen jedoch zusätzlich Fehler, so dass teilweise nicht alle Teile des Spaltbandes ausreichend von den Zwischenhölzern unterstützt werden. Insbesondere bei schmalen, geölten oder nur schwach aufgewickelten Spaltbändern besteht dadurch die Gefahr eines Abrutschens einzelner Windungen im nicht unterstützten Bereich. Diese Probleme werden bei der Ladungssicherung beim Transport erhöht, da durch die zur Sicherung der Spaltbänder verwendeten Spanngurte auch in nicht von den Zwischenhölzern unterstützten Bereichen ein Druck ausgeübt wird, der die Windungen herunterzieht. Die Folgen sind auch hier Beschädigungen durch Kratzerbildung und eine mangelnde Wickelgenauigkeit, wodurch die Qualität des Spaltbandes erheblich gemindert wird.

Vor diesem Hintergrund ist es Aufgabe der vorliegenden Erfindung, eine Transporteinheit zu schaffen, welche eine Beschädigung der zu stapelnden Bänder vermeidet und gleichzeitig maschinell verarbeitbar ist. Gemäß der Erfindung wird diese Aufgabe durch eine Transporteinheit mit den Merkmalen des Patentanspruchs 1 gelöst.

Mit der Erfindung ist eine Transporteinheit zum Stapeln von Spaltbändern aus Aluminium geschaffen, welches einerseits maschinell handhabbar ist, andererseits Beschädigungen aufgrund von Spänen, Splittern oder Restfeuchte sowie Harz vermeidet. Dies ist dadurch hervorgerufen, dass das Element nicht aus Naturholz sondern aus mitteldichtem Faserplattenmaterial hergestellt ist. Eine Profilleiste aus MDF-Material ist bspw. in der EP 2 194 211 A2 beschrieben. Bei mitteldichten Holzfaserplatten, kurz MDF-Platten, handelt es sich um Platten aus einem Holzwerkstoff. Der Holzwerkstoff ist feinst zerfasert. Üblicherweise finden rindenfreie Nadelhölzer Anwendung, die durch ein schonendes Verpressen zu einem gleichmäßig homogenen Holzwerkstoff verarbeitet werden. Die Kanten sind glatt und fest. Aus diesem Grunde weisen Sie keinen Abrieb bei Belastung auf. In Folge dessen sondern sie auch keine Späne oder Splitter ab.

Bevorzugt hat das Element einen rechteckigen Querschnitt. Aufgrund des rechteckigen Querschnitts können zwischen den gestapelten Spaltbändern je nach Kundenwunsch zwei verschiedene Distanzmaße realisiert werden.

Die Aufgabe der vorliegenden Erfindung wird außerdem durch ein Verfahren mit den Merkmalen des Patentanspruchs 3 gelöst. Das Verfahren ermöglicht die Bestimmung der optimalen Anordnung der Zwischenhölzer auf den Spaltringen, wodurch ein Überstand der Zwischenhölzer vermieden ist. Beeinträchtigungen beim Transport und der Handhabung der Spaltringe sowie der aus den gestapelten Spaltringen erstellten Bunde sind damit vermieden. Gleichzeitig ist durch die automatische Bestimmung der optimalen Position der Zwischenhölzer die fehlerhafte Unterstützung gestapelter Spaltringe verhindert und die Sicherheit beim Stapeln erhöht.

Andere Weiterbildungen und Ausgestaltungen der Erfindung sind in den übrigen Unteransprüchen angegeben. Ausführungsbeispiele der Erfindung sind in der Zeichnung dargestellt und werden nachfolgend im Einzelnen beschrieben. Es zeigen:
- Fig. 1: die Darstellung eines Zwischenholzes;
- Fig. 2: die Darstellung von Zwischenhölzern in auf einem Spaltring ange-ordnetem Zustand;
- Fig. 3: die Darstellung von Zwischenhölzern in auf einem anderen Spaltring angeordnetem Zustand;
- Fig. 4: die Darstellung einer Förder- bzw. Verpackungsanlage für Spaltringe.

Das als Ausführungsbeispiel dargestellte Zwischenholz 1 dient zum Stapeln von liegend angeordneten Spaltbändern aus Aluminium, insbesondere von Mittel- und Schmalbändern, nachfolgend als "Spaltringe" 2 bezeichnet. Das Zwischenholz 1 ist von einem Element gebildet, welches einen viereckigen Querschnitt aufweist. Es hat in der Draufsicht und in der Ansicht auf die Längsseite eine rechteckige Form. Das Element hat eine Länge L, die im Ausführungsbeispiel 600mm beträgt. Das Element weist einen rechteckigen Querschnitt auf, der im Ausführungsbeispiel eine Kantenlänge von 30 x 40 mm hat.

Erfindungsgemäß ist das Element aus mitteldichtem Faserplattenmaterial (MDF-Platten) hergestellt. Dabei wird Naturholz in Zerfaserungsmaschinen gemahlen, wodurch Holzfasern entstehen. Die Fasermasse wird vorgetrocknet und anschließend zu einem Faservlies aufgestreut. Unter Beimengung von Bindemittel in Form von Kunstharzen wird das Gemisch verpresst, wobei in der Regel Mehretagenpressen zur Anwendung kommen.

Das Material zeichnet sich durch einen homogenen Aufbau und sehr gute Oberflächenqualität aus. Ein Vorteil der MDF-Elemente besteht darin, dass man die Kanten ohne spezielle Vorarbeiten direkt profilieren kann. Sie lassen sich lackieren und mit Kunststofffolien oder beharzten Papieren beschichten. Die Elemente sind feuchtigkeitsunempfindlich, lassen sich gut bearbeiten und sind gut recyclebar. Hinzu kommt, dass die erfindungsgemäßen Elemente aus mitteldichtem Faserplattenmaterial maschinell hergestellt werden. Dadurch weisen sie eine immer gleiche Form, gleiches Gewicht und gleiche Abmessungen auf. Sie eignen sich daher hervorragend für eine maschinelle Handhabung.

Durch die Eignung der erfindungsgemäßen Zwischenhölzer aus mitteldichtem Faserplattenmaterial für eine maschinelle Handhabung, lassen sich diese vollautomatisch auf den Spaltringen 2 platzieren. Die automatische Handhabung ist in einen vollautomatischen Ablauf in einer Spaltanlage integrierbar. Ein solcher Ablauf bis hin zum Stapeln der Spaltringe 2 beginnt mit dem Aufrollen des Spaltbandes zu einem Spaltring. Der Spaltring 2 wird dann mit Metallband bereift, so dass der Ring seine Form behält, um einen zuverlässigen Transport zu ermöglichen.

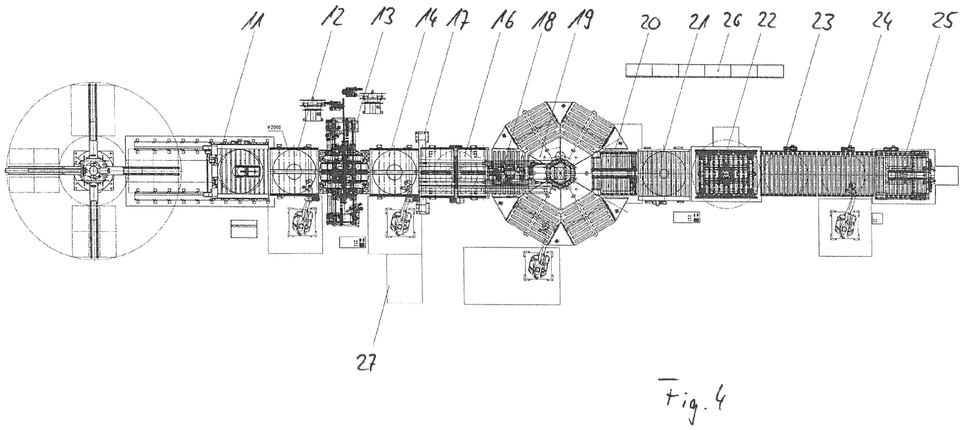

Der bereifte Spaltring 2 wird auf eine Förder- bzw. Verpackungsanlage aufgelegt, wie sie beispielhaft in Figur 4 dargestellt ist. Mit Hilfe der Förderanlage wird der Spaltring liegend bis zu einer Stapelvorrichtung 17 transportiert. Dabei passiert der Spaltring 2 zunächst einen Vereinzelungs-Bundkippstuhl 11 und einen Puffer-Rollgang 12, bevor er einen Verpackungs-Drehtisch 13 erreicht. Über einen weiteren Puffer-Rollgang 14 gelangt der Spaltring 2 zur Stapelvorrichtung 17. In diesem Bereich ist ein Zentrier-Rollgang 16 vorgesehen, der den Spaltring 2 einem Ringgreifersystem 18 zuführt. Mit Hilfe des Ringgreifersystems 18 wird der Spaltring auf einem Stapelkarussell 19 abgelegt. Auf dem Stapelkarussell 19 erfolgt die nachfolgend im Einzelnen beschriebene Anordnung mehrerer Spaltringe zu einem Bund. An das Stapelkarussell 19 schließt sich ein Rollgang 20 an, der eine Hubvorrichtung umfasst. Über einen Puffer-Rollgang 21 gelangt der Spaltring-Bund zu einem Verpackungsrollgang 22, der mit einem Drehkreuz für die Spaltring-Pakete versehen ist. Es folgen weitere Puffer-Rollgänge 23, 24, wobei der Rollgang 23 mit einer Waage ausgestattet ist. Die Förderanlage endet mit einem Auslauf-Kippstuhl 25. Die Steuerung und Überwachung der Förder- bzw. Verpackungsanlage für die Spaltringe erfolgt mittels Steuer- oder Schaltschrank 26.

Die Förder- bzw. Verpackungsanlage beinhaltet eine Datenerfassung, die die geometrischen Daten des Spaltrings erfasst. Insbesondere werden hier der Außen- und der Innendurchmesser und die Breite des Spaltrings erfasst. Die erfassten Daten werden einem Rechnersystem zugeführt, welches unter Berücksichtigung der Abmessungen des Spaltrings und der Abmessungen der Zwischenhölzer 1 eine optimale Positionierung der Zwischenhölzer auf dem Spaltring 2 ermittelt.

Eine solche Ermittlung kann erfindungsgemäß durch Festlegen eines ersten Punkts am Außendurchmesser des Spaltrings erfolgen. Im Anschluss daran bestimmt das Rechnersystem in Abhängigkeit von den geometrischen Daten einen ersten Punkt am Innendurchmesser des Spaltrings, dessen Abstand zum ersten Punkt am Außendurchmesser kleiner oder gleich der Länge L der Zwischenhölzer ist. Nach Festlegen und Bestimmung der Punkte am Innen- und Außendurchmesser werden diese Berechnungen mit mindestens zwei weiteren Punkten am Außendurchmesser einschließlich der Bestimmung des zugehörigen Punktes am Innendurchmesser wiederholt.

Während der Bestimmung der Punkte am Außen- und Innendurchmesser wird der Spaltring zu der Stapelvorrichtung 17 transportiert. Nach Erreichen der Stapelvorrichtung 17 wird das Förderband angehalten. Das Erreichen der Stapelvorrichtung 17 kann beispielsweise durch eine Lichtschranke detektiert werden. Nach Erreichen der Stapelvorrichtung 17 und Anhalten der Verpackungsanlage beginnt das Auflegen der Zwischenhölzer auf den Spaltring. Hierzu nimmt ein Roboter ein erstes Zwischenholz aus einem Vorratsbehältnis 27, bei dem es sich um eine Palette, eine Gitterbox oder dergleichen handeln kann. Die Aufnahme des Zwischenholzes kann entweder mit Hilfe eines am Roboterarm vorgesehenen mechanischen Greifers oder auch durch einen oder mehrere Vakuumsauggreifer erfolgen. Die Verwendung von Vakuumsauggreifern ist aufgrund der hohen Oberflächenqualität der Zwischenhölzer aus mitteldichtem Faserplattenmaterial besonders geeignet. Außerdem bietet die Verwendung von Vakuumsauggreifern den Vorteil, dass zwischen den in dem Vorratsbehältnis angeordneten Zwischenhölzern kein Abstand herrschen muss, welcher bei üblichen spreizbaren Greifern erforderlich ist, um das Einfahren eines spreizbaren Greifers zwischen die in dem Behältnis gestapelten Zwischenhölzer zu ermöglichen.

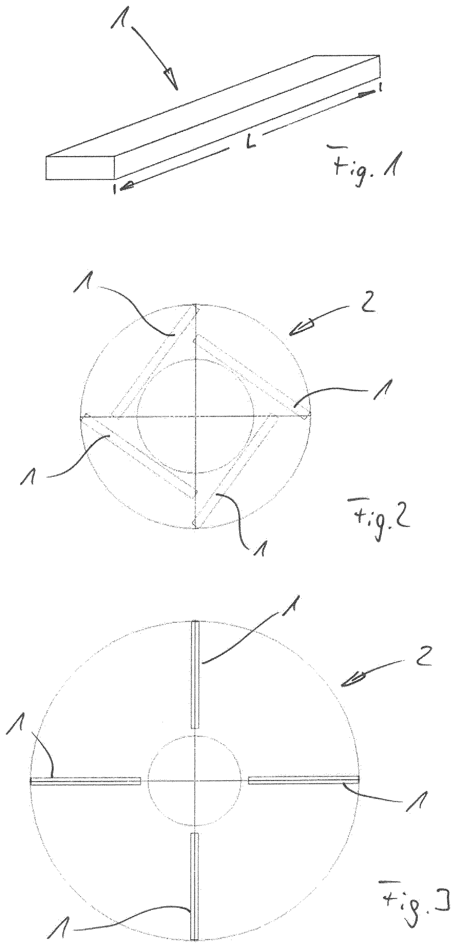

Das von dem Roboterarm aufgenommene Zwischenholz 1 wird dann auf den Spaltring 2 in einer Position aufgelegt, die den ausgewählten ersten Punkt am Außendurchmesser mit dem bestimmten ersten Punkt am Innendurchmesser des Spaltrings 2 verbindet. Dabei ist gewährleistet, dass das Zwischenholz weder über den Außendurchmesser des Spaltrings 2 hervorragt, noch über den Innendurchmesser in das Spaltringloch hineinragt. Folglich ergibt sich bei einem Spaltring, bei dem der Abstand zwischen Außendurchmesser und Innendurchmesser geringer als die Länge L des Zwischenholzes ist, am Innendurchmesser eine tangentiale Anordnung des Zwischenholzes 1, wie dies in Figur 2 dargestellt ist. Ist der Abstand zwischen Außendurchmesser und Innendurchmesser gleich der Länge L des Zwischenholzes 1, ergibt sich eine radiale Ausrichtung der Zwischenhölzer, welche den Umfang des Spaltrings 2 mit dem Spaltringloch verbindet. Ist der Abstand zwischen Außendurchmesser und Innendurchmesser größer als die Länge L des Zwischenholzes, werden die Zwischenhölzer ebenfalls radial ausgerichtet, wobei sie von den am Außendurchmesser bestimmten Punkt radial nach innen gerichtet sind und in einem Abstand zum Spaltringloch enden (vgl. Figur 3). Nach dem Ablegen des ersten Zwischenholzes 1 auf dem Spaltring 2 werden von dem Roboter weitere Zwischenhölzer aus dem Vorratsbehältnis 27 entnommen und in der vorberechneten Position auf dem Spaltring 2 abgelegt. In Abhängigkeit von den Abmessungen des jeweiligen Spaltrings werden drei oder mehr Zwischenhölzer in der vorbestimmten Weise auf dem Spaltring 2 abgelegt.

Nach dem Ablegen der Zwischenhölzer 1 auf dem Spaltring 2 wird dieser weitertransportiert zu dem Stapelkarussell 19. Bei Erreichen der des Stapelkarussells 19 wird die Förder- bzw. Verpackungsanlage angehalten. Die Ermittlung der Position kann auch hier mit Hilfe einer Lichtschranke erfolgen. Gleichzeitig wird ein weiterer Spaltring 2 nachgeführt, der bei Erreichen der Stapelvorrichtung 17 in der vorbeschriebenen Weise mit Zwischenhölzern belegt wird. Auch dieser Spaltring 2 wird im Anschluss an das Auflegen der Zwischenhölzer 1 weiter zum Stapelkarussell 19 transportiert und dort auf den ersten, mit Zwischenhölzern versehenen Spaltring, aufgelegt. Dieser Vorgang wiederholt sich mehrfach, bis die vorbestimmte Anzahl an Spaltringen aufeinander zu einem Bund gestapelt ist. Der letzte Spaltring erhält dabei keine Zwischenhölzer, da dieser letzte Spaltring das obere Ende des Bundes darstellt, auf den kein Spaltring aufgelegt wird. Das so erstellte Bund an gestapelten Spaltringen, welches eine Transporteinheit bildet, wird dann von der Förderanlage wie oben beschrieben weiter transportiert, der Förderanlage entnommen und entweder zum sofortigen Weitertransport auf geeignete Transportmittel verbracht wird oder einer Zwischenlagerung zugeführt wird.

Neben der vorbeschriebenen beispielsweise optischen Erfassung der geometrischen Daten der zu stapelnden Spaltringe besteht auch die Möglichkeit, im Rahmen des abzuarbeitenden Auftrags die geometrischen Daten unmittelbar an die Verpackungsstation zu übertragen. In diesem Falle kann auf die getrennte Erfassung der geometrischen Daten verzichtet werden, wodurch der konstruktive Aufwand der Anlage reduziert ist. Außerdem besteht durch die Übermittlung der Auftragsdaten und damit auch der Übermittlung der geometrischen Daten der einzelnen Spaltringe die Möglichkeit, die Anzahl an zu stapelnden Spaltringen für den gesamten Auftrag vorzubestimmen. Die Anzahl der zu stapelnden Ringe sollte bei jedem Auftrag gleichmäßig verteilt sein. Zudem ist die Anzahl der stapelbaren Spaltringe durch das Gesamtgewicht des Bundes, welches durch die Rahmenbedingungen beim Transport des Bundes begrenzt ist, vorgegeben.

Mit dem erfindungsgemäßen Verfahren unter Verwendung der erfindungsgemäßen Zwischenhölzer besteht die Möglichkeit einer vollständigen Automatisierung bei der Anordnung der Zwischenhölzer. Dies ist insbesondere im Hinblick auf die Anforderungen an die vollständige Digitalisierung und Automatisierung der Produktionsabläufe erforderlich. Durch die Bestimmung der optimalen Anordnung der Zwischenhölzer auf den Spaltringen ist zudem ein Überstand der Zwischenhölzer vermieden, so dass Beeinträchtigungen beim Transport und der Handhabung der Spaltringe sowie der aus den gestapelten Spaltringen erstellten Bunde nicht zu befürchten. Gleichzeitig ist durch die automatische Bestimmung der optimalen Position der Zwischenhölzer die fehlerhafte Unterstützung gestapelter Spaltringe vermieden und dadurch die Sicherheit beim Stapeln erhöht.

Bei der Verwendung von vier Zwischenhölzern ergibt sich zudem ein Vorteil bei der Sicherung des Bundes aus Spaltringen beim Transport, beispielsweise per Bahn oder LKW. Dieser resultiert daraus, dass bei der Benutzung von vier Zwischenhölzern die ausgewählten Punkte am Außendurchmesser jeweils um 90° versetzt zueinander angeordnet sind. Dadurch kann die Spannkraft der Ladungssicherungsmittel, bei denen es sich überwiegend um Spanngurte handelt, punktgenau in die Zwischenhölzer eingeleitet werden. Dadurch ist ein Verkratzen der Oberfläche oder ein Verziehen der Wickelkante des obersten Spaltrings vermieden.

## Patentansprüche

1. Transporteinheit, bestehend aus einem Bund aus mindestens zwei Spaltbändern aus Aluminium, zwischen denen mindestens drei Zwischenhölzer (1) angeordnet sind, wobei die Zwischenhölzer (1) jeweils von einem Element gebildet sind, welches einen viereckigen Querschnitt aufweist und eine rechteckige Form hat, wobei das Element aus mitteldichtem Faserplattenmaterial hergestellt ist.

2. Transporteinheit nach Anspruch 1, **dadurch gekennzeichnet, dass** das Element einen rechteckigen Querschnitt aufweist.

3. Verfahren zur Anordnung von Zwischenhölzern (1) aus mitteldichtem Faserplattenmaterial mit einer Länge L auf Spaltbändern aus Aluminium mit folgenden Verfahrensschritten:
a) Erfassen des Außen- und des Innendurchmessers sowie die Breite eines Spaltrings (2)
b) Zuführen der erfassten Daten zu einem Rechnersystem
c) Festlegen eines Punkts am Außendurchmesser
d) Bestimmen eines Punkts am Innendurchmesser, der bei einem Abstand zwischen Außen- und Innendurchmesser größer oder gleich der Länge L dem gewählten Punkt am Außendurchmesser in radialer Richtung am nächsten ist oder bei einem Abstand zwischen Außen- und Innendurchmesser kleiner der Länge L zu einer tangentialen Ausrichtung der Verbindung zwischen Außen- und Innendurchmesser am ausgewählten Punkt am Innendurchmesser führt
e) Wiederholen der Schritte c) und d) mit mindestens zwei weiteren Punkten am Außendurchmesser
f) Aufnehmen eines Zwischenholzes (1) aus einem Vorratsbehältnis (27) mittels eines Roboters
g) Auflegen des Zwischenholzes (1) auf den Spaltring (2) mit Hilfe des Roboters in einer Position, die den ersten Punkt am Außendurchmesser mit dem ersten Punkt am Innendurchmesser verbindet
h) Wiederholen der Schritte f) und g) mit mindestens zwei weiteren Zwischenhölzern (1) und den weiteren, bestimmten Punkten am Außen- und Innendurchmesser
i) Weitertransport des Spaltrings (2) mit den Zwischenhölzern (1) zu einem Stapelkarussell (19)
j) Stapeln von mindestens einem zweiten Spaltring (2) auf den Zwischenhölzern (1) des ersten Spaltrings (2) zu einem Bund.

4. Verfahren nach Anspruch 3, **dadurch gekennzeichnet, dass** auf dem zweiten Spaltring (2) Zwischenhölzer (1) aufgelegt werden.

5. Verfahren nach Anspruch 3 oder 4, **dadurch gekennzeichnet, dass** der letzte Spaltring (2) eines Bundes ohne Zwischenhölzer (1) gestapelt wird.

6. Verfahren nach einem der Ansprüche 3 bis 5, **dadurch gekennzeichnet, dass** vier Zwischenhölzer (1) auf einen Spaltring (2) aufgelegt werden.

7. Verfahren nach einem der Ansprüche 3 bis 6, **dadurch gekennzeichnet, dass** das Bund aus gestapelten Spaltringen (2) mittels eines Förderbandes zu einer Verladestation transportiert wird, an der das Bund dem Förderband entnommen wird.

## Claims

1. Transport unit consisting of a stack of at least two coils made of aluminium, between which at least three wooden separators (1) are arranged, wherein the wooden separators (1) are each formed by an element which has a square cross-section and a rectangular shape, wherein the element is made of medium density fibre board material.

2. Transport unit according to claim 1, **characterised in that** the element has a rectangular cross-section.

3. Method for arranging wooden separators (1) made of medium density fibre board material of a length L on coils made of aluminium comprising the following steps:
a) Determining the outer and inner diameter as well as the width of a split ring (2)
b) Supplying the collected data to a computing system
c) Specifying a point on the outer diameter
d) Determining a point on the inner diameter which is closest to the selected point on the outer diameter in a radial direction if the distance between outer and inner diameter is greater than or equal to the length L or leads to a tangential orientation of the connection between outer and inner diameter at the selected point on the inner diameter if the distance between outer and inner diameter is less than the length L
e) Repeating steps c) and d) with at least two further points on the outer diameter
f) Picking up a wooden separator (1) from a storage container (27) by means of a robot
g) Placing the wooden separator (1) on the split ring (2) by means of the robot in a position which connects the first point on the outer diameter with the first point on the inner diameter
h) Repeating steps f) and g) with at least two further wooden separators (1) and the further determined points on the outer and inner diameter
i) Further transport of the split ring (2) with the wooden separators (1) to a stack carousel (19)
j) Stacking of at least one second split ring (2) on the wooden separators (1) of the first split ring (2) to form a stack.

4. Method according to claim 3, **characterised in that** wooden separators (1) are placed on the second split ring (2).

5. Method according to claim 3 or 4, **characterised in that** the last coil (2) of a stack is stacked without wooden separators (1).

6. Method according to one of claims 3 to 5, **characterised in that** four wooden separators (1) are placed on a split ring (2).

7. Method according to one of claims 3 to 6, **characterised in that** the stack of stacked coils (2) is transported to a loading station by means of a conveyor belt, where the stack is taken off the conveyor belt.

## Revendications

1. Unité de transport consistant en une bobine composée d'au moins deux bandes refendue en aluminium, entre lesquelles sont disposées au moins trois traverses en bois (1), sachant que les traverses en bois (1) sont formées chacune par un élément présentant une section quadrangulaire et de forme rectangulaire, sachant que l'élément est fabriqué à partir d'un matériau à panneau de fibres moyenne densité.

2. Unité de transport selon la revendication 1, **caractérisée en ce que** l'élément présente une section rectangulaire.

3. Procédé pour disposer des traverses en bois (1) fabriquées à partir d'un matériau à panneau de fibres moyenne densité de longueur L, sur des bandes refendues en aluminium, en passant par les étapes de procédé suivantes :
a) Saisie des diamètres extérieur et intérieur ainsi que de la largeur d'un anneau fendu (2)
b) Amenée des données saisies à un système informatique
c) Fixation d'un point sur le diamètre extérieur
d) Détermination d'un point sur le diamètre intérieur, point qui, lorsque l'écart entre le diamètre extérieur et le diamètre intérieur est supérieur ou égal à la longueur L, est le plus proche du point choisi sur le diamètre extérieur dans le sens radial, ou qui, lorsque l'écart entre le diamètre extérieur et le diamètre intérieur est inférieur ou égal à la longueur L résulte en une orientation tangentielle de la liaison entre le diamètre extérieur et le diamètre intérieur au point sélectionné sur le diamètre intérieur
e) Répétition des pas c) et d) avec au moins deux points supplémentaires sur le diamètre extérieur
f) Prélèvement, par un robot, d'une traverse en bois (1) depuis un récipient de stockage (27)
g) Pose d'une traverse en bois (1) sur l'anneau fendu (2) avec l'aide du robot, sur une position qui relie le premier point sur le diamètre extérieur et le premier point sur le diamètre intérieur
h) Répétition des pas f) et g) avec au moins deux traverses en bois (1) supplémentaires et avec les points supplémentaires déterminés sur le diamètre extérieur et le diamètre intérieur
i) Poursuite du transport de l'anneau fendu (2) avec les traverses en bois (1) vers un carrousel d'empilage (19)
j) Empilage d'au moins un deuxième anneau fendu (2) sur les traverses en bois (1) du premier anneau fendu (2) pour former une bobine.

4. Procédé selon la revendication 3, **caractérisé en ce que** des traverses en bois (1) sont posées sur le deuxième anneau fendu (2).

5. Procédé selon la revendication 3 ou 4, **caractérisé en ce que** le dernier anneau fendu (2) d'une bobine est empilé sans traverses (1) en bois intermédiaires.

6. Procédé selon l'une des revendications 3 à 5, **caractérisé en ce que** quatre traverses en bois (1) sont posées sur un anneau fendu (2).

7. Procédé selon l'une des revendications 3 à 6, **caractérisé en ce que** la bobine composée d'anneaux fendus (2) empilés est transportée par un tapis convoyeur vers une station de manutention au niveau de laquelle la bobine est ensuite retirée du tapis convoyeur.
